# EUROPEAN PATENT APPLICATION

(11) **EP 0 998 049 A2**
(43) Date of publication of application: **03.05.2000**
(21) Application number: 99121579.9
(22) Date of filing: 29.10.1999
(51) Int. Cl.: H04B 1/16

(54) **FM multiplex decoder circuit**

(30) Priority: 29.10.1998 JP 30913698
(71) Applicant: NEC CORPORATION, Tokyo (JP)
(72) Inventor: Noguchi, Yasuyuki, c/o NEC IC Microcom. Syst., Ltd, Kawasaki-shi, Kanagawa (JP)
(74) Representative: Betten & Resch

(57) **Abstract**

In an FM multiplex decoder circuit of this invention, when the cycle interval of detection signal of continuous "1" or "0" elongates and therefore erroneous sampling clock occurs, the shift clock is forced into stopping. Therefore, erroneous extra data is not sent to the shift register, thereby data that detection signal is normally decoded can be output from the shift register. Also, even when the cycle interval of detection signal of continuous "1" or "0" shortens to elongate the sampling clock cycle and therefore data to be taken by the latch circuit decreases, in a shift clock period newly generated, inverted latch signal can be taken by the shift register. Thus, the shift register can take data lost to latch signal. Therefore, data that detection signal is normally decoded can be output from the shift register.

## Description

### FIELD OF THE INVENTION

This invention relates to an FM (frequency-modulation) multiplex decoder circuit, and more particularly to, an FM multiplex decoder circuit equipped with a correction circuit for correcting a bit deviation caused by a variation of cycle in detection signal.

### BACKGROUND OF THE INVENTION

Recently, FM multiplex broadcast that, in addition to conventional stereophonic sound broadcast, digital data such as traffic information, weather forecast etc. are multiplexed has been started.

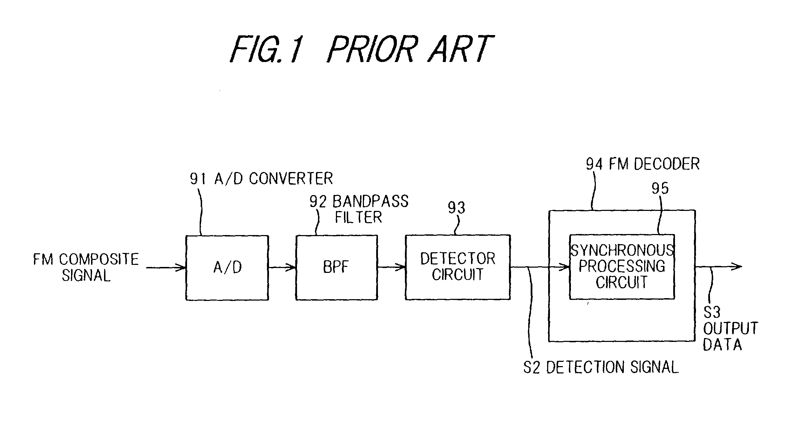

Referring to FIG.1, main part of an FM receiver used for the FM multiplex broadcast currently is explained. FM composite signal S1 is signal that audio signal and digital data, which is composed of block identification code (BIC) and where one block is of 272 bits, are frequency-modulated. Block identification code (BIC) "0" corresponds to 72 kHz and BIG "1" corresponds to 80 kHz.

FM composite signal S1 is converted from analogue value to digital value by an A/D converter 91, then input to a bandpass filter 92 so as to extract block identification code (BIC)

Then, a detector circuit 93 receives 72 kHz and 80 kHz signal, outputting detection signal S2 to an FM decoder 94. Although detection signal S2 is serial data with a frequency of 16 kHz, it is asynchronous signal including no clock. Therefore, it is necessary to synchronize it by a synchronous processing circuit 95 composing the FM decoder 94 to latch data.

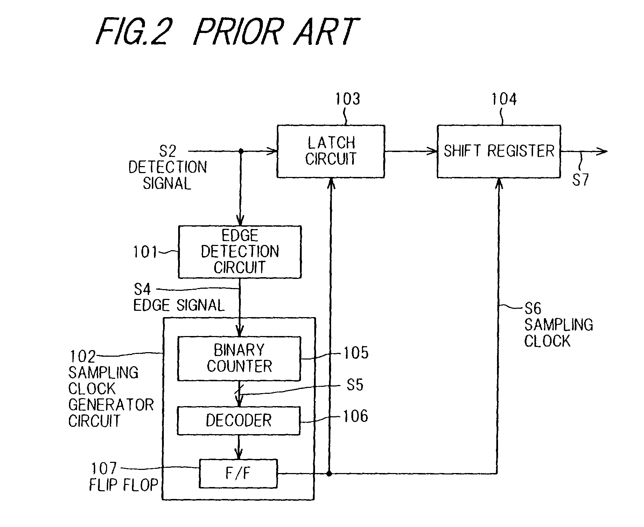

As shown in FIG.2, the synchronous processing circuit 95 comprises an edge detection circuit 101 to output edge signal S4 and a sampling clock generator circuit 102 to which edge signal S4 is input and which generates sampling clock S6 that is clock signal for a latch circuit 103 and a shift register 104.

Also, the sampling clock generator circuit 102 comprises a 5-bit binary counter 105 to the reset terminal of which edge signal S4 is input, a decoder circuit 106 which decodes output signal S5 of the binary counter 105 and then outputs it to a flip flop 107, and the flip flop 107 which operates with clock signal having a frequency higher than sampling clock S6.

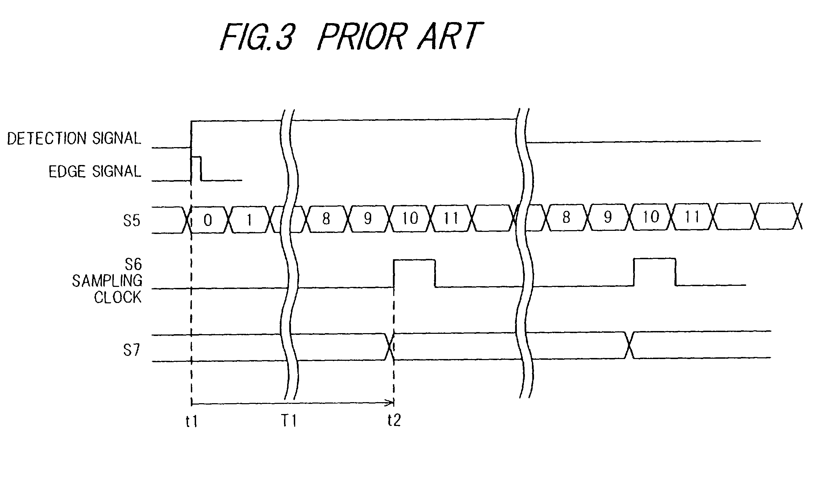

Referring to FIG.3, the operation of the synchronous processing circuit 95 in FIG.2 is explained below.

When detection signal S2 rises at time t1 in FIG.3, the edge detection circuit 101 outputs edge signal S4 to the reset terminal of the binary counter 105 synchronizing with the rising edge. The binary counter 105 is reset and starts counting up every one clock.

The decoder circuit 106 outputs such decode signal that becomes active when the 5-bit output value of the binary counter 105 is, for example, ten at time t2 after passing T1 second from time t1, to the flip flop 107.

Time T1 is generally set so that sampling clock S6 locates at the middle of the interval from the rising edge to the falling edge of detection signal S2.

The flip flop 107 latches decode signal, outputting sampling clock S6 to the latch circuit 103 and the shift register 104. By this method, sampling clock S6 with a constant cycle of T1 is generated.

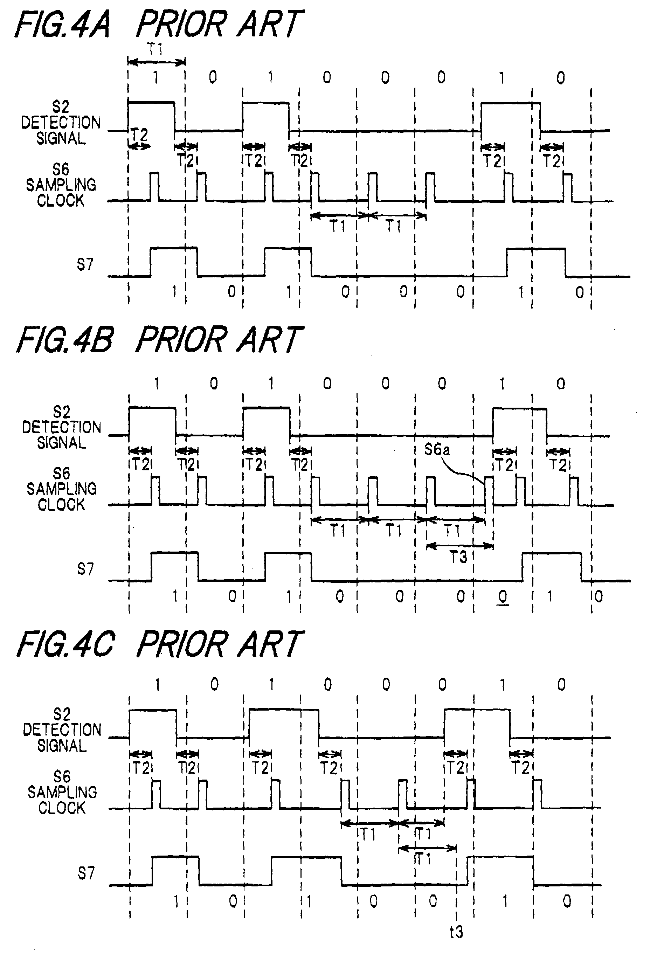

Namely, as shown in FIG.4A, detection signal S2 is detected, and then, by using this signal as a trigger, sampling clock S6 to latch data at the middle of 16 kHz is generated. Also, for signal to repeat "1" or "0" continuously, data is latched using 16 kHz-cycle sampling clock on the basis of the first-generated sampling clock S6. So, even when detection signal S2 repeats "1" or "0" continuously, data is taken stably.

However, when receiving the FM multiple broadcast while driving a car, the intensity of received radio wave varies with time and, due to this, the cycle of detection signal S2 varies. In the conventional FM multiplex decoder circuit shown in FIGS.1 and 2, for data that detection signal S2 repeats "1" or "0" continuously, due to the accumulated error of cycle, bits more than proper multiplex signal may be taken or lack of bit may occur.

Such problems are explained in detail in FIGS.4B and 4C.

FIG.4B shows an example that bits more than proper multiplex signal are taken. Since time T3 from the rising edge of sampling clock S6 to the rising edge of detection signal S2 is longer than time T1, erroneous extra pulse signal S6a occurs in clock S6. By the rising edge of this pulse signal S6a, "0" in detection signal S2 is latched and extra data "0" occurs in output signal S7.

FIG.4C shows an example that one-bit data is lost from the proper multiplex signal. Since time T4 from the rising edge of sampling clock S6 to the rising edge of detection signal S2 is shorter than time T1, data "0" to be latched at time t3 properly is lost.

In the FM multiplex decoder, the saving of received data is conducted by using the error detection and error correction functions. However, when a bit deviation in the above examples occurs, the effect of the error detection and error correction functions cannot be brought out, therefore one-block data of 288 bits is lost.

Also, once a bit deviation occurs, the composition of 288-bit cycle block must be broken. So, when detection signal is taken, it is important that data is taken without incurring a bit deviation.

Although PN decoding (differential decoding) is conducted so as not to give continuous data in data line, 4-bit continuous data is included in a block identification code (BIC) provided as a block synchronous pattern. Therefore, it is necessary to avoid an error in taking at least 4-bit continuous data.

It is desirable that sampling clock to take detection signal S2 latches data at the middle of 16 kHz data. However, for detection signal with a data rate of lower than 31.25 µS, data cannot be taken accurately.

Explaining this in detail, when the clock for the binary counter 105 and the flip flop 107 operates at 304 kHz, by one-clock deviation, detection signal S2 incurs a duty error of 3.29 µS.

If detection signal S2 of four continuous "0" or "1" equivalent of 2.375 clock is aligned, then 3.29 (µS) x 2.375 (clock) x 4 (bits) =31.25 (µS) is given, therefore data cannot be accurately taken from detection signal S2.

Also, if detection signal S2 of five continuous "0" or "1" is aligned, an error in taking data can occur with a phase deviation of 1.9 clock. This is a more serious problem.

### SUMMARY OF THE INVENTION

Accordingly, it is an object of the invention to provide an FM multiplex decoder circuit that decoded data can be taken accurately from detection signal even when the cycle of detection signal varies with time and detection signal repeats "0" or "1" continuously.

According to the invention, an FM multiplex decoder circuit, comprises:
a latch circuit which latches detection signal that serial data multiplexed onto FM modulated wave is binarized by a predetermined detection means by using latch clock, and outputs latch signal;
a first selector circuit which outputs selecting either of the latch signal and inverted latch signal obtained by inverting the latch signal according to first control signal;
a shift register to which output of the first selector circuit is input and which uses shift clock as clock signal;
an edge detection circuit which detects the edge of the detection signal and then outputs edge signal corresponding to the edge;
a timing generator means which generates the latch clock, shift clock signal and edge interval signal based on the edge signal;
a comparator means which determines whether the edge interval signal is smaller than a first threshold value, larger than a second threshold value greater than the first threshold value or between the first and second threshold values, and outputs determination signal; and
a selector and selector control means which selects the shift clock signal as the shift clock when the edge interval signal is between the first and second threshold values, stops the shift clock when the edge interval signal is smaller than the first threshold value, and generates the shift clock forcibly while generating the first control signal to force the first selector circuit to output the inverted latch signal when the edge interval signal is larger than the second threshold value.

### BRIEF DESCRIPTION OF THE DRAWINGS

The invention will be explained in more detail in conjunction with the appended drawings, wherein:
FIG.1 is a block diagram showing main part of the conventional FM receiver,
FIG.2 is a block diagram showing a synchronous processing circuit 95 in FIG.1,
FIG.3 is a timing chart for explaining the operation of the synchronous processing circuit 95 in FIG.1,
FIGS.4A to 4C are timing charts for explaining the operation of the synchronous processing circuit 95 in FIG.1,
FIG.5 is a block diagram showing an FM multiplex decoder circuit in a preferred embodiment according to the invention,
FIG.6 is a circuit diagram showing an edge detection circuit 11 in FIG.5,
FIG.7 is a circuit diagram showing a latch clock generator circuit 12 in FIG.5,
FIG.8 is a circuit diagram showing an edge interval measurement and comparator circuit 16 in FIG.5,
FIG.9 is a truth-value table indicating outputs of AND gates 45 to 47 in FIG.8,
FIG.10 is a circuit diagram showing mainly a selector control circuit 17 in FIG.5,
FIG.11 is a timing chart for explaining the operation of the FM multiplex decoder circuit in the embodiment, and
FIG.12 is a timing chart for explaining the operation of the FM multiplex decoder circuit in the embodiment.

### DESCRIPTION OF THE PREFERRED EMBODIMENTS

An FM multiplex decoder circuit in the preferred embodiment according to the invention will be explained below, referring to the drawings.

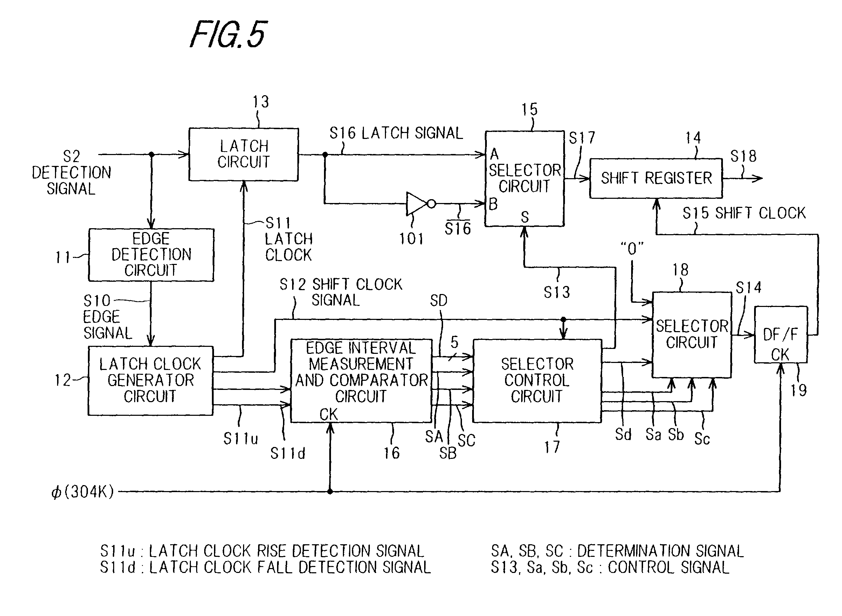

FIG.5 is a block diagram showing an FM multiplex decoder circuit in the embodiment. As shown, the FM multiplex decoder circuit comprises an edge detection circuit 11 which detects the rising edge and falling edge of detection signal S2 and generates edge signal S10 corresponding to both the edges, a latch clock generator circuit 12 to which edge signal S10 is input and which outputs latch clock S11, shift clock signal S12, latch clock rise detection signal S11u and latch clock fall detection signal Slid, a latch circuit 13 which latches detection signal S2 synchronizing with latch clock S11 and outputs latch signal S16, an edge interval measurement and comparator circuit 16 to which latch clock rise detection signal S11u, latch clock fall detection signal S11d and 304 kHz clock signal φ (304K) are input and which measures edge interval signal Sedg, determines whether edge interval signal Sedg is between two threshold values m, n (m<n), smaller than threshold value m or larger than threshold value n, and outputs determination signal SA, SB or SC as the determination result and 5-bit signal SD (SD4 to SD0=LSB), a selector control circuit 17 to which determination signal SA, SB or SC and 5-bit signal SD are input and which outputs control signal S13 for a selector circuit 15, control signals Sa, Sb and Sc for a selector circuit 18 and signal Sd, the selector circuit 15 which selects either of to output latch signal S16 unalteredly to a shift register 14 or to output inverted latch signal S16 (bar), which is the inverted value of latch signal S16, to the register 14 according to control signal S13, the selector circuit 18 which selects any one of to output shift clock signal S12 unalteredly to a flip flop 19, to output signal Sd generated by the selector control circuit 17 to the flip flop 19 or to output "0" for stopping shift clock S15 supplied to the shift register 14 to the flip flop 19 according to control signals Sa, Sb and Sc, the flip flop 19 which takes output signal S14 from the selector circuit 18 at the rise of clock signal φ (304K) and outputs shift clock S15 to the shift register 14, and the shift register 14 which uses shift clock S15 as a clock and to which output signal S17 from the selector circuit 15 is input.

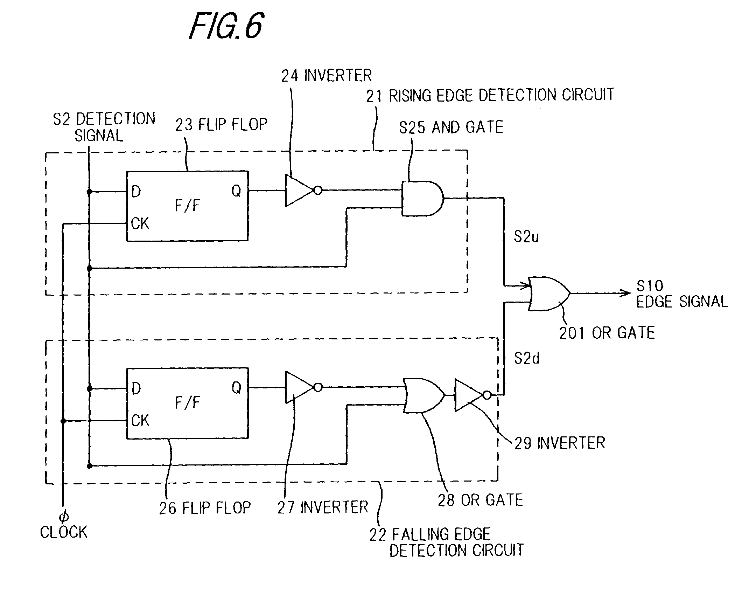

Referring to FIG.6, the edge detection circuit 11 is explained below.

The edge detection circuit 11 comprises a rising edge detection circuit 21 which detects the rising edge of detection signal S2 and then outputs rising edge detection signal S2u to an OR gate 201, a falling edge detection circuit 22 which detects the falling edge of detection signal S2 and then outputs falling edge detection signal S2d to the OR gate 201, and the OR gate 201 which conducts the logical add operation between rising edge detection signal S2u and falling edge detection signal S2d, and outputs edge signal S10.

The rising edge detection circuit 21 comprises a flip flop 23 to which detection signal S2 is input and which latches detection signal S2 at the rise of basic clock φ which is sufficiently faster than clock signal φ (304K), an inverter 24 which inverts output of the flip flop 23, and an AND gate 25 which conducts the logical product operation between detection signal S2 and output of the inverter 24 and then outputs rising edge detection signal S2u to the OR gate 201. Meanwhile, the flip flops used in this embodiment are explained as a device to take input data synchronizing with the rise of clock signal.

Also, the falling edge detection circuit 22 comprises a flip flop 26 to which detection signal S2 is input and which uses basic clock φ as a clock, an inverter 26 which inverts output of the flip flop 26, an OR gate 28 which conducts the logical add operation between detection signal S2 and output of the inverter 26, and an inverter 29 which inverts output of the OR gate 28 and then outputs falling edge detection signal S2d to the OR gate 201.

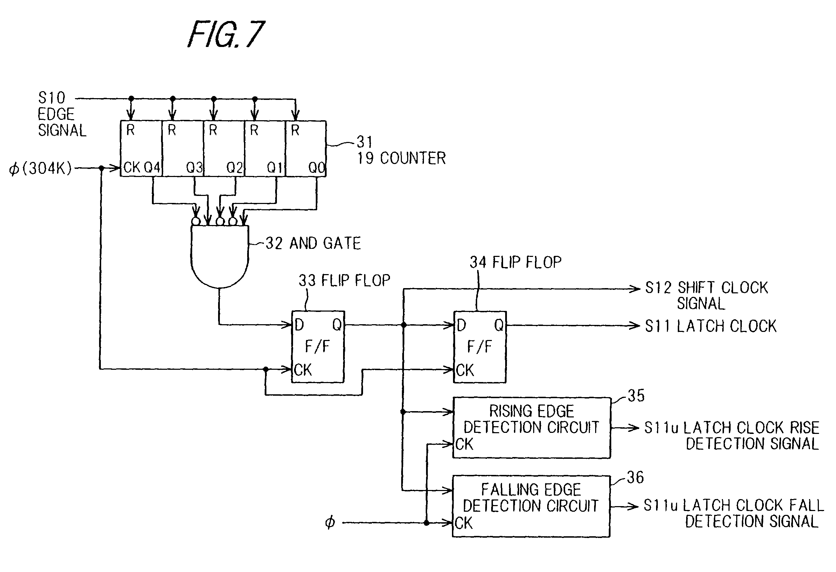

As shown in FIG.7, the latch clock generator circuit 12 comprises a 5-bit-composed 19 counter 31 to the reset terminal of which edge signal S10 is input and which counts in a base-19 number system using clock signal φ (304K), an AND gate 32 which conducts the logical product operation of 5-bit outputs of the 19 counter 31, a flip flop 33 to which output of the AND gate 32 is input and which uses clock signal φ (304K) as a clock, a flip flop 34 to which output of the flip flop 33 is input and which outputs latch clock S11, a rising edge detection signal 35 which detects the rising edge of output signal of the flip flop 33 and then generates latch clock rise detection signal S11u with a narrow pulse width synchronizing with the rising edge, and a falling edge detection signal 36 which detects the falling edge of output signal of the flip flop 33 and then generates latch clock fall detection signal S11d with a narrow pulse width synchronizing with the falling edge.

The operation of the latch clock generator circuit 12 is explained below.

The 19 counter 31, which is reset by edge signal S10 input to the reset terminal R, counts up one by one every time clock signal φ (304K) is input, and returns to "0" when counting up by one from 18. The AND gate 32 outputs "1" only when 5-bit output Q0 to Q4 of the 19 counter 31 is (0,1,0,0,1)="9".

Thus, the AND gate 32 decodes output of the 19 counter 31 to output "1" at a timing corresponding to time T2 in FIGS.4A-4C. In other words, it operates so that "1" generates at the middle of pulse width T1 in FIGS.4A-4C.

The flip flop 33 takes output signal of the AND gate 32 with clock signal φ (304K), and outputs it as clock shift signal S12. Also, the flip flop 34 takes clock shift signal S12 with clock signal φ (304K), and outputs latch clock S11.

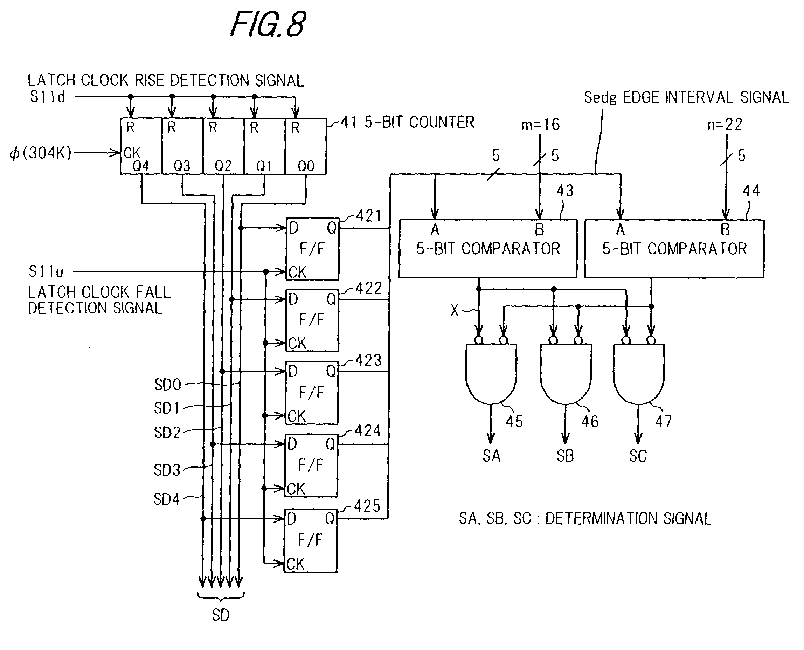

Referring to FIG.8, the edge interval measurement and comparator circuit 16 is explained below.

The edge interval measurement and comparator circuit 16 comprises a 5-bit counter 41 to the rest terminal R of which latch clock fall detection signal S11d is input and which outputs 5-bit output signal SD4 to SD0 with clock signal φ (304K), flip flops 421 to 425 which take output SD4 to SD0 of the 5-bit counter 41 with latch clock rise detection signal S11u, 5-bit comparators 43, 44 which compare whether 5-bit data from the flip flops 421 to 425 is larger than threshold values m and n, respectively, or not, and AND gates 45 to 47.

The operation of the edge interval measurement and comparator circuit 16 is explained below.

When latch clock fall detection signal S11d is input to the reset terminal R, the 5-bit counter 41 is reset, and starts counting up clock signal φ (304K) and outputs it as output signal SD4 to SD0 to the flip flops 421 to 425.

The flip flops 421 to 425 take output signal SD4 to SD0 with latch clock rise detection signal S11u. Thus, by using the 5-bit counter 41 and the flip flops 421 to 425, the time interval between latch clock fall detection signal Slid and latch clock rise detection signal S11u is measured. The flip flops 421 to 425 outputs 5-bit edge interval signal Sedg as the measurement result to the 5-bit comparators 43, 44.

The 5-bit comparator 43 compares 5-bit edge interval signal Sedg input to five-input terminal A (A4 to A0) with 5-bit threshold value m (m4 to m0) input to five-input terminal B (B4 to B0) . If Sedg<m, then "1" is output, and if Sedg>m, then "0" is output.

Similarly, the 5-bit comparator 44 compares 5-bit edge interval signal Sedg input to five-input terminal A (A4 to A0) with 5-bit threshold value n (n4 to n0) input to five-input terminal B (B4 to B0). If Sedg<n, then "1" is output, and if Sedg>n, then "0" is output.

Here, m is set to be 16 three fewer than 19, and n is set to be 22 three more than 19. Namely, by the 5-bit comparators 43, 44, it is determined whether edge interval signal Sedg is smaller than 16, between 16 and 22, or larger than 22.

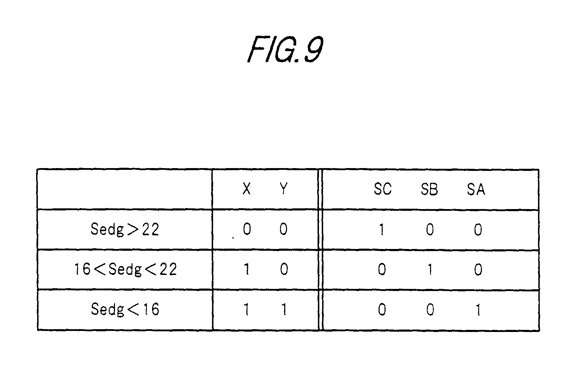

Then, the AND gates 45 to 47 generate determination signals SA, SB and SC in truth-value table shown in FIG.9 from outputs X and Y of the comparators 43 and 44, respectively.

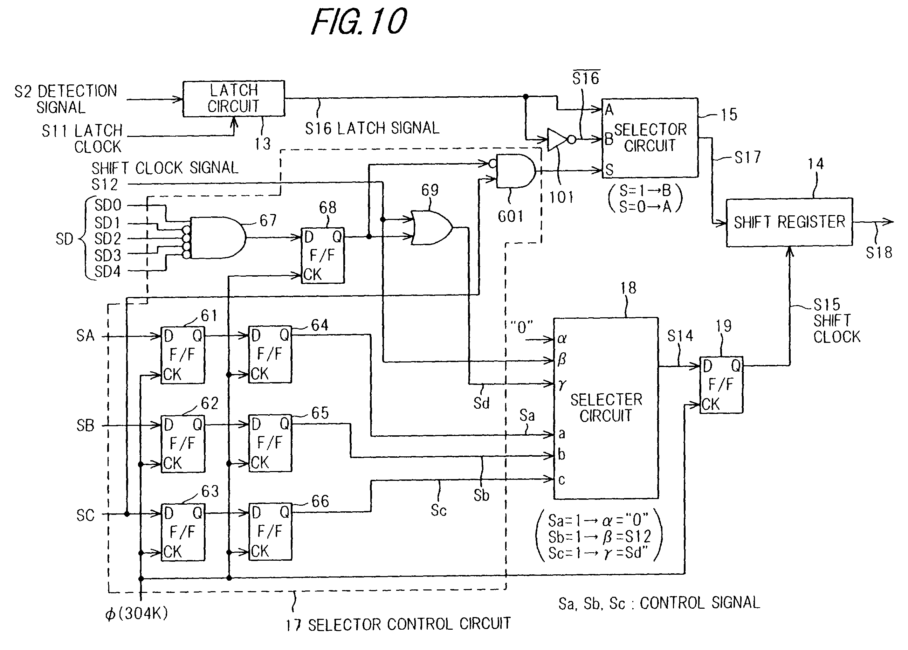

As shown in FIG.10, the selector control circuit 17 comprises flip flops 61 to 63 to which determination signals SA, SB and SC output from the AND gates 45 to 47 as shown in FIG.8 are input and which use clock signal φ (304K) as a clock, flip flops 64 to 66 to which outputs of the flip flops 61 to 63 are input and which use clock signal φ (304K) as a clock and output control signals Sa, Sb and Sc to the selector circuit 18, an AND gate 67 to which output signal SD (SD4 to SD0) of the 5-bit counter 41 is input, a flip flop 68 to which output of the AND gate 67 is input and which use clock signal φ (304K) as a clock, an OR gate 69 to which output of the flip flop 68 and shift clock signal S12 are input and which outputs signal Sd to the selector circuit 18, and an AND gate 601 to which output of the flip flop 68 and determination signal SC are input.

The selector circuit 15 selects inverted latch signal S16 (bar) as output signal S17 when "1" is input to terminal S, and selects latch signal S16 when "0" is input terminal S.

On the other hand, the selector circuit 18 selects "0" input to terminal α when control signal Sa input to terminal a is "1", selects shift clock signal S12 input to terminal β when control signal Sb is "1", and selects output signal Sd of the OR gate 69 input to terminal γ when control signal Sc is "1".

Referring to FIGS.5 to 12, the operation of FM multiplex decoder circuit in the embodiment of the invention is explained below.

First, the case that detection signal S2 has no bit deviation is explained. In this case, in the edge interval measurement and comparator circuit 16, edge interval signal Sedg is 19, which is between the threshold vales m=16 and n=22. Therefore, for determination signals SA, SB and SC, as shown in FIG.9, SB is "1" and the others are "0".

Since determination signal SC is "0", as seen from FIG. 10 output of the AND gate 601 is "0". So, since terminal S of the selector circuit 15 is "0", the selector circuit 15 outputs latch signal S16 unalteredly as output signal S17 to the shift register 14.

Also, as seen from the operations of the flip flops 61 to 62 in FIG.10, for control signals Sa, Sb and Sc, only control Sb is "1" and the others are "0". Therefore, the selector circuit 18 selects shift clock signal S12, outputting it as output signal S14 to the flip flop 19.

As explained above, when detection signal S2 has no bit deviation, normal latch signal S16 is selected as input signal to the shift register 14 and shift clock signal S12 is selected as shift clock S15. This operation is almost the same as the prior art explained in FIG.4A.

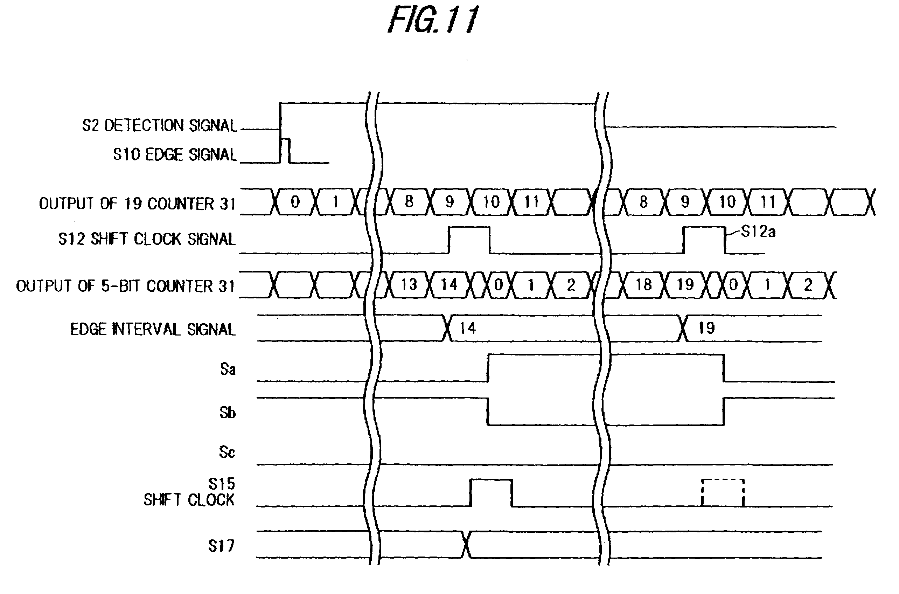

Next, explained is the case that, as shown in FIG.11, the time interval of detection signal of continuous "1" or "0" elongates and therefore erroneous shift clock signal S12a occurs.

Due to latch clock rise detection signal S11u and latch clock fall detection signal S11d generated by the latch clock generator circuit 12 shown in FIG.7, in the edge interval measurement and comparator circuit 16 shown in FIG 8, edge interval signal Sedg decreases to a value smaller than the threshold value m (=16)

So, as seen from FIG.9, for detection signals SA, SB and SC, only SA is "1" and the others are "0".

Therefore, for control signals Sa, Sb and Sc from the flip flops 64 to 66 in FIG.10, as shown in FIG.11, only control signal Sa is "1" and the others are "0". The selector circuit 18 selects "0" and erroneous shift clock signal S12a is forced into stopping, and shift clock S15 is as shown in FIG.11.

Since output of the AND gate 601 is "0", the selector circuit 15 outputs latch signal S16 unalteredly, as output signal S17, to the shift register 14.

As described above, since shift clock S15 is forced into stopping when edge interval signal Sedg decreases, erroneous extra data is not sent to the shift register 14 and data that detection signal S2 is normally decoded is output from the shift register 14.

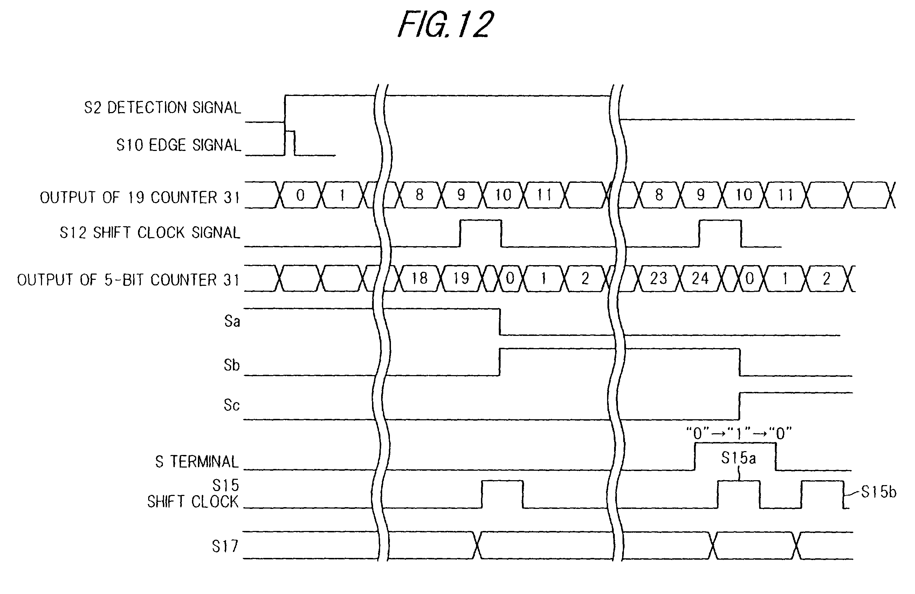

Next, explained is the case that, as shown in FIG.12, the time interval of detection signal of continuous "1" or "0" shortens and the sampling clock cycle elongates and therefore data to be taken by the latch circuit 13 decreases.

Due to latch clock rise detection signal S11u and latch clock fall detection signal S11d generated by the latch clock generator circuit 12 shown in FIG.7, in the edge interval measurement and comparator circuit 16 shown in FIG.8, edge interval signal Sedg increases to a value larger than the threshold value n (=22)

So, as seen from FIG.9, for detection signals SA, SB and SC, only SC is "1" and the others are "0".

Therefore, for control signals Sa, Sb and Sc from the flip flops 64 to 66 in FIG.10, as shown in FIG.12, only control signal Sc is "1" and the others are "0". The selector circuit 18 selects output signal Sd from the OR gate 69, outputting it as output signal S14 to the flip flop 19.

Namely, shift clock S15 becomes two continuous pulse signals S15a and S15b which are obtained adding shift clock signal S12 and output signal from the flip flop 68 by the OR gate 69.

On the other hand, as shown in FIG.12, the terminal S of the selector circuit 15 changes like "0" → "1"→ "0". So, it becomes "1" in a period for shift clock S15a newly generated, therefore inverted latch signal S16 (bar) is selected. Thus, the shift register 14 can take data lost to latch signal S16.

As explained above, even when the sampling cycle elongates and therefore data to be taken by the latch circuit 13 decreases, data that detection signal S2 is normally decoded can be output from the shift register 14.

Meanwhile, although the above embodiment is explained using the threshold values m16 and n=22 of the 5-bit comparators 43 and 44, respectively, they can be kept in the best state by setting to match to the state of detection signal that changes according to the field strength etc. of FM receiver.

Also, although the embodiment is explained for detection signal obtained by detecting serial data multiplexed onto FM modulated wave by the detection circuit, this invention is not limited to such application. This invention can be similarly applied to the decoding of serial data that "1" or "0" is continuously and asynchronously input.

### Advantages of the Invention:

In the FM multiplex decoder circuit of the invention, when the cycle interval of detection signal of continuous "1" or "0" elongates and therefore erroneous sampling clock occurs, the shift clock is forced into stopping. Therefore, erroneous extra data is not sent to the shift register, thereby data that detection signal is normally decoded can be output from the shift register.

Also, even when the cycle interval of detection signal of continuous "1" or "0" shortens to elongate the sampling clock cycle and therefore data to be taken by the latch circuit decreases, in a shift clock period newly generated, inverted latch signal can be taken by the shift register. Thus, the shift register can take data lost to latch signal. Therefore, data that detection signal is normally decoded can be output from the shift register.

Although the invention has been described with respect to specific embodiment for complete and clear disclosure, the appended claims are not to be thus limited but are to be construed as embodying all modification and alternative constructions that may be occurred to one skilled in the art which fairly fall within the scope of the appended claims.

## Claims

1. An FM multiplex decoder circuit, comprising:
a latch circuit which latches detection signal that serial data multiplexed onto FM modulated wave is binarized by a predetermined detection means by using latch clock, and outputs latch signal;
a first selector circuit which outputs selecting either of said latch signal and inverted latch signal obtained by inverting said latch signal according to first control signal;
a shift register to which output of said first selector circuit is input and which uses shift clock as clock signal;
an edge detection circuit which detects the edge of said detection signal and then outputs edge signal corresponding to the edge;
a timing generator means which generates said latch clock, shift clock signal and edge interval signal based on said edge signal;
a comparator means which determines whether said edge interval signal is smaller than a first threshold value, larger than a second threshold value greater than said first threshold value or between said first and second threshold values, and outputs determination signal; and
a selector and selector control means which selects said shift clock signal as said shift clock when said edge interval signal is between said first and second threshold values, stops said shift clock when said edge interval signal is smaller than said first threshold value, and generates said shift clock forcibly while generating said first control signal to force said first selector circuit to output said inverted latch signal when said edge interval signal is larger than said second threshold value.

2. An FM multiplex decoder circuit, according to claim 1, wherein:
said latch clock is activated at the middle of a high-level period or low-level period in one cycle of said detection signal.

3. An FM multiplex decoder circuit, according to claim 1, wherein said timing generator means comprises:
a first counter which is reset by said edge signal and counts first clock with a frequency higher than the frequency of said edge signal;
a decoder circuit which decodes output of said first counter;
a first flip flop which takes output of said decoder circuit with said first clock, and outputs said shift clock signal;
a second flip flop which takes said shift clock signal with said first clock, and outputs said latch clock;
a rising edge detection circuit which detects the rise of said shift clock signal with basic clock faster than said first clock, and outputs latch clock rise detection signal;
a falling edge detection circuit which detects the fall of said shift clock signal with said basic clock, and outputs latch clock fall detection signal;
a second counter which is reset by said latch clock fall detection signal, and counts said first clock; and
a plurality of flip flops which take output of said second counter using said latch clock rise detection signal as clock, and output said edge interval signal.

4. An FM multiplex decoder circuit, according to claim 3, wherein:
said decoder circuit is provided with an AND gate to which output or its inverted value of said first counter is input.

5. An FM multiplex decoder circuit, according to claim 1, wherein said comparator means comprises:
a first n-bit comparator which compares which of said first threshold value and said edge interval signal is larger, and outputs a first comparison result;
a second n-bit comparator which compares which of said second threshold value and said edge interval signal is larger, and outputs a second comparison result; and
a decoder which outputs said determination signal determined by said first and second comparison results.

6. An FM multiplex decoder circuit, according to claim 1, wherein:
said first and second threshold values are set according to the field strength of said FM modulated wave.

7. An FM multiplex decoder circuit, according to claim 1, wherein said selector and selector control means comprises:
a plurality of flip flops which latches said determination signal with said first clock, and outputs second control signal; and
a second selector circuit which outputs selecting signal "0" applied to its first input terminal, said shift clock signal applied to its second input terminal, or said shift clock generated forcibly applied to its third input terminal according to said second control signal.

8. An FM multiplex decoder circuit, according to claim 3, wherein:
said first clock has a frequency that is K times the basic frequency of said detection signal, and said first counter is a base-K number system counter, where K is an integer.

9. An FM multiplex decoder circuit according to claim 1, further comprising any or any combination of the features recited in claims 2 to 8.
